# EUROPÄISCHE PATENTANMELDUNG

(11) **EP 0 794 043 A2**
(43) Veröffentlichungstag der Anmeldung: **10.09.1997**
(21) Anmeldenummer: 97102840.2
(22) Anmeldetag: 21.02.1997
(51) Int. Cl.: B29B 9/08, B01J 2/02

(54) **Verfahren zur Herstellung von Polycarbonatagglomerat**

(30) Priorität: 06.03.1996 DE 19608521
(71) Anmelder: BAYER AG, 51368 Leverkusen (DE)
(72) Erfinder: Zaby, Gottfried, Dr., 51375 Leverkusen (DE); Casper, Clemens, Dr., 47809 Krefeld (DE); Kohlgrüber, Klemens, Dr., 51515 Kürten (DE); Obermann, Hugo, Dr., 41540 Dormagen (DE)

(57) **Zusammenfassung**

Die Erfindung betrifft ein Verfahren zur Herstellung von Polycarbonatagglomerat hoher Schüttdichte aus Polycarbonatlösungen, bei dem das organische Lösungsmittel einer Lösung von Polycarbonat mittels Wasserdampf zerteilt wird und das dadurch gekennzeichnet ist, daß die entstehende Suspension von Polycarbonatpartikeln, kondensiertem Wasser und Wasser- und Lösungsmitteldampf in einem Rohr oder einem rohrförmigen Wärmetauscher zu einem mit Wasser teilgefüllten, unter erhöhtem Druck stehenden Abscheider geführt wird. Die Polycarbonatagglomerate werden über eine Druckschleuse am Boden des Abscheiders zusammen mit einem Teil des Wassers abgelassen.

## Beschreibung

Die Erfindung betrifft ein Verfahren zur Herstellung von Polycarbonatagglomerat hoher Schüttdichte aus Polycarbonatlösungen, bei dem das organische Lösungsmittel einer Lösung von Polycarbonat mittels Wasserdampf zerteilt wird und das dadurch gekennzeichnet ist, daß die entstehende Suspension von Polycarbonatpartikeln, kondensiertem Wasser und Wasser- und Lösungsmitteldampf in einem Rohr oder einem rohrförmigen Wärmetauscher zu einem mit Wasser teilgefüllten, unter erhöhtem Druck stehenden Abscheider geführt wird. Die Polycarbonatagglomerate werden über eine Druckschleuse am Boden des Abscheiders zusammen mit einem Teil des Wassers abgelassen.

In einer Verfahrensvariante wird die oben beschriebene Suspension von Polycarbonatpartikeln, kondensiertem Wasser und Wasser- und Lösungsmitteldampf in einem Zyklon von Wasser- und Lösungsmitteldampfen getrennt. Die Polycarbonatpartikel werden in einem nachgeschalteten Schachttrockner durch Wasserdampfstrippung vom anhaftenden Lösungsmittel befreit und anschließend in einem gerührten, unter Druck stehendem Behälter bei einer Temperatur, die der Glastemperatur des Polycarbonates entspricht, kompaktiert.

Nach einer Grobabtrennung des Wassers durch Siebung oder Zentrifugation oder beidem werden die Agglomerate in einem Kontakttrockner nachgetrocknet. Die so gewonnen Polycarbonatagglomerate zeichnen sich durch eine höhere Schüttdichte, eine enge Korngrößenverteilung und extrem geringen Restlösungsmittelgehalt aus.

Die Isolierung von Polycarbonaten aus ihren Lösungen mit Hilfe von Wasserdampf ist an sich bekannt.

So wird in der US-Patentschrift 3 508 339 die Verwendung einer speziellen Düse in Kombination mit einer Mischkammer, in der Polycarbonatlösung und Dampf vereinigt werden und einem sich anschließenden Rohr mit konstantem Durchmesser, in dem das Lösungsmittel abgetrocknet wird, beschrieben.

Das US Patent 4 212 967 (entspricht EP 3996) beschreibt die Kombination einer Düse vom De Laval-Typ mit einem beheizten Rohr, das sich in seinem Durchmesser von der Düse beginnend vergrößert.

Die Patentschrift US 4 568 418 beschreibt die Kombination einer Düse mit anschließendem Agglomerationsrohr, wobei das Rohr durch einen konstanten Durchmesser und mindestens sechs halbkreisförmige Schleifen charakterisiert ist.

Die nach diesen Verfahren gewonnen Polycarbonat-Agglomerate haben jedoch eine niedrige Schüttdichte. Außerdem erfordern diese Verfahren einen hohen Dampfeinsatz, was ihre Wirtschaftlichkeit verschlechtert.

Die europäische Offenlegungsschrift EP 0 616 002 A1 beschreibt ein Verfahren zur Herstellung von Polycarbonat-Pulver hoher Schüttdichte aus Polycarbonatlösungen in Methylenchlorid durch Vereinigung von Wasserdampf mit der Polycarbonatlösung in einer Düse, an die ein unbeheiztes Verweilrohr angeschlossen ist.

Durch diese bekannten Verfahren werden Polycarbonatpartikel gewonnen, die vom organischen Lösungsmittel weitgehend befreit sind (Restlösungsmittelgehalt etwa 1 bis 10 Gew.-%). Um zu sehr Kleinen Restlösungsmittelgehalten (Restlösungsmittelgehalt < 2 bis 5 ppm) zu gelangen, ist bei jedem Verfahren noch eine Nachtrocknung erforderlich.

Die Polycarbonatpartikel, die nach den bisher bekannt gewordenen Verfahren gewonnen werden, haben jedoch eine noch nicht ganz befriedigende Nachtrockenbarkeit, was zur ihrer Trocknung die Verwendung großvolumiger Apparate mit langer Verweilzeit und hohem Energieeinsatz erfordert.

In der deutschen Anmeldeschrift DE 4224025 A1 wird durch die Sprühverdampfung in Rohren mit Verengungen zwar ebenfalls eine gute Nachtrockenbarkeit erreicht, aber die Schüttdichte ist bei den nach diesem Verfahren erhaltenen Agglomeraten wesentlich geringer als dies für die Weiterverarbeitung angestrebt wird.

Es wurde überraschenderweise gefunden, daß die bei der Isolierung von thermoplastischen aromatischen Polycarbonaten aus ihren Lösungen durch Zerteilen mittels Wasserdampf und weiterem Eindampfen in einem Rohr oder rohrförmigen Wärmetauscher gewonnenen Agglomerate durch Abscheiden in einem teilweise mit Wasser gefüllten, unter Druck stehenden Behälter vom Lösungsmittel befreit und gleichzeitig kompaktiert werden, und daß man nach dem Abtrennen des Wassers und Abtrocknung der Restfeuchte Agglomerate mit einheitlicher Korngrößenverteilung, hoher Schüttdichte und besonders geringen Lösungsmittelrestgehalten erhält.

Das Verfahren zur Herstellung von Polycarbonatagglomeraten hoher Schüttdichte ist dadurch gekennzeichnet, daß eine Lösung von 3 bis 30 Gew.-%, vorzugsweise 12 bis 25 Gew.-% Polycarbonat in Lösungsmittel, vorzugsweise Dichlormethan in einer Düse mit Wasserdampf von 100 bis 300°C, vorzugsweise 190 bis 220°C und einem Druck von 2 bis 100 bar, vorzugsweise 15 bis 30 bar, gemischt und diese Mischung in einem Rohr oder einem rohrförmigen Wärmetauscher mit einem Verhältnis von Länge zu Durchmesser von 100 bis 10000, vorzugsweise 300 bis 1000, zu einem Abscheider geleitet wird, dessen Volumen 80 bis 200 l, bezogen auf einen Durchsatz von 10 kg Polycarbonat pro Stunde und dessen Höhe 0,5 bis 1,5 seines Durchmessers beträgt, und der zu 50 bis 75 % seines Volumens mit Wasser gefüllt ist, in dem die gasförmigen Bestandteile der einströmenden Mischung bei einem Druck von 0,9 bis 7 bar, vorzugsweise 3 bis 5 bar und bei einer Temperatur von 120 bis 180°C, vorzugsweise 140 bis 160°C abgetrennt werden. Die Temperatur des rohrförmigen Wärmetauschers beträgt insbesondere 150 bis 220°C.

Der Abscheider kann mit einem Rührer versehen sein, dessen Rührgeschwindigkeit 2 bis 50 UpM, vorzugsweise 10 UpM beträgt.

Die Polycarbonatpartikel werden in Abständen von 5 bis 30 Minuten, vorzugsweise 5 bis 10 Minuten über eine Druckschleuse vom Boden des Abscheiders zusammen mit Wasser entnommen, auf Umgebungsdruck entspannt und durch Siebung oder Zentrifugation oder beidem vom mitgeführten Wasser getrennt. Das mit den Agglomeraten entnommene Wasser wird z.B. durch Einleiten von erhitztem Druckwasser und Wasserdampf ersetzt bzw. gegebenenfalls rückgeführt. Die Restfeuchte der Granulate wird durch Trocknung, z.B. in einem Scheibentrockner bei einer Heiztemperatur von 120 bis 150°C entfernt.

Die erhaltenen Lösungsmitteldämpfe leitet man bevorzugt über eine Brüdenleitung, in die ein Entspannungsventil zur Einstellung und Konstanthaltung des Drucks eingebaut ist, aus dem Behälter zu einem Kühler, in dem sie kondensiert werden, ab.

In einer Variante des erfindungsgemäßen Verfahrens, die ebenfalls Erfindungsgegenstand ist, wird als Abscheider statt des unter Druck stehenden Behälters wie vorstehend beschrieben, ein Zyklon verwendet. Aus dem Zyklon werden die abgeschiedenen Agglomerate einem, dem Zyklon nachgeschalteten, Schachttrockner zugeführt und hier durch Durchleiten von Wasserdampf, z.B. einer Temperatur von 100 bis 110°C, innerhalb von 30 bis 120 Minuten, bevorzugt von 90 bis 120 Minuten, vom Lösungsmittel befreit. Die wasserdampfbehandelten Agglomerate werden in den Druckbehälter gefördert und unter erhöhtem Druck und einer Temperatur bei der Glastemperatur des Polycarbonates unter Rühren zu Partikeln mit höherer Schüttdichte agglomeriert.

Thermoplastische, aromatische Polycarbonate, die im Sinne des erfindungsgemäßen Verfahrens eingesetzt werden, sind die bekannten aromatischen Homopolycarbonate, Copolycarbonate und Mischungen dieser Polycarbonate, die sich von folgenden Diphenolen ableiten:

Hydrochinon, Resorcin, Dihydroxydiphenyl, Bis-(hydroxyphenyl)alkane, Bis-(hydroxyphenyl)-cycloalkane, Bis-(hydroxyphenyl)-sulfide, -ether, -sulfoxide, -sulfone und α,α'-Bis-(hydroxyphenyl)-diisopropylbenzole, sowie deren kernalkylierte und kernhalogenierte Verbindungen.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050, sowie in der Monographie "H. Schnell, Chemistry and Physics of Polycarbonates, Interscience Publishers, New York, 1964" beschrieben.

Bevorzugte Diphenole sind
4,4'-Dihydroxydiphenyl,
2,2-Bis-(4-hydroxyphenyl)-propan,
2,4-Bis-(4-hydroxyphenyl)-2-methylbutan,
1,1 -Bis-(4-hydroxyphenyl)-cyclohexan,
α,α'-Bis-(4-hydroxyphenyl)-p-diisopropylbenzol,
α,α'-Bis-(4-hydroxyphenyl)-m-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1 -Bis-(3,5-dimethyl-4-hydroxyphenyl)-cyclohexan,
α,α'-Bis-(3,5-dimethyl4-hydroxyphenyl)-p-diisopropylbenzol,
1,1 -Bis-(4-hydroxyphenyl)-3,3,5-trimethylcyclohexan,
1,1 -Bis-(4-hydroxyphenyl)-3-methylcyclohexan,
1,1 -Bis-(4-hydroxyphenyl)-3,3-dimethylcyclohexan,
1,1 -Bis-(4-hydroxyphenyl)-4-methylcyclohexan,
2,2-Bis-(3,5-dichlor-4-hydroxyphenyl)-propan,
2,2-Bis-(3,5-dibrom-4-hydroxyphenyl)-propan,
1,1 -Bis-(4-hydroxyphenyl)-1-phenyl-ethan,
2,2-Bis-(3,5-dimethyl-4-hydroxyphenyl)-2-phenyl-ethan,
2,2-Bis-(4-hydroxyphenyl)-2,2-diphenyl-ethan,
9,9-Bis-(4-hydroxyphenyl)-fluoren,
9,9-Bis-(3,5-dimethyl-4-hydroxyphenyl)-fluoren .

Besonders bevorzugte Diphenole sind z.B.:
2,2-Bis-(4-hydroxyphenyl)-propan,
2,2-Bis-(3,5-dimethyl-4-hydroxyphenyl)-propan,
1,1-Bis-(4-hydroxyphenyl)-cyclohexan,
1,1-Bis-(4-hydroxyphenyl)-1-phenyl-ethan,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-4-methylcyclohexan,
9,9-Bis-(3,5-dimethyl-4-hydroxyphenyl)-fluoren.

Insbesondere sind 2,2-Bis-(4-hydroxyphenyl)-propan, 1,1-Bis-(4-hydroxyphenyl)-3,3,5-trimethylcyclohexan und 1,1-Bis-(4-hydroxy-phenyl)-1-phenyl-ethan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise bei der Synthese mitverwendet werden. Einige der verwendbaren Verbindungen sind beispielsweise:
1,3,5-Tris-(4-hydroxyphenyl)-benzol,
1,3,5-Tris-(4-(4-hydroxyphenylisopropyl)-phenyl)-benzol,
1,1,1-Tris-(4-hydroxyphenyl)-ethan,
2,6-Bis-(2-hydroxy-5'-methyl-benzyl)-4-methylbenzol,
2-(4-Hydroxyphenyl)-2-(2,4-dihydroxyphenyl)-propan,
Hexakis-(4-(4-hydroxyphenylisopropyl)-phenyl)-ortho-terephthalsäureester,
Tetrakis-(4-hydroxyphenyl)-methan,
1,4-Bis-((4',4''-dihydroxytriphenyl)-methyl)-benzol,
3,3-Bis-(4-hydroxyphenyl)-2-oxo-2,3-dihydroindol,
3,3-Bis-(4-hydroxy-3-methyl-phenyl)-2-oxo-2,3-dihydroindol.

Ferner geeignet sind die diesen Verbindungen entsprechenden Chlorkohlensäureester, sowie die Säuren oder bevorzugt die Säurechloride von mehr als 2-basigen aliphatischen oder aromatischen Carbonsäuren, also beispielsweise
2,4-Dihydroxybenzoesäure, bzw. 2,4-Dihydroxybenzoesäuredichlorid,
Trimesinsäure, bzw. Trimesinsäuretrichlorid,
Trimellithsäure, bzw. Trimellithsäuretrichlorid,
Cyanursäuretrichlorid,
wobei diese Verzweiger einzeln oder im Gemisch vorgelegt oder der Synthese portionsweise zugesetzt werden können.

Die Herstellung der erfindungsgemäßen Polycarbonate bzw. Polycarbonatgemische kann im wesentlichen nach folgenden bekannten Methoden (vgl. H. Schnell, "Chemistry and Physics of Polycarbonates", Polymer Review, Vol IX, Seite 27 ff., Interscience Publishers, New York, 1964) erfolgen:
1. Nach dem Schmelzumesterungsverfahren.
2. Nach dem Lösungsverfahren in disperser Phase, sogenanntes "Phasengrenzflächenverfahren".

Die in Rede stehenden Lösungen von thermoplastischen, aromatischen Polycarbonaten in den organischen Lösungsmitteln haben Konzentrationen zwischen 3 Gew.-% und 30 Gew.-%, vorzugsweise zwischen 12 Gew.-% und 20 Gew.-%.

Als organische Lösungsmittel sind alle diejenigen geeignet, die die Polycarbonate zu mindestens 5 Gew.-% lösen und die einen Siedepunkt von nicht mehr als 150°C aufweisen. Bevorzugte Lösungsmittel sind Dichlormethan, Monochlorbenzol, Toluol, Tetrahydrofuran oder 1,3-Dioxolan sowie Mischungen der genannten Lösungsmittel. Besonders bevorzugt ist Dichlormethan.

Der verwendete Wasserdampf hat eine Temperatur von 100°C bis 300°C, vorzugsweise 140°C bis 250°C. Die Polycarbonatlösung hat zu Beginn des Verfahrens bevorzugt eine Temperatur von 10°C bis 200°C, vorzugsweise 20°C bis 120°C.

Das Gewichtsverhältnis von Lösungsmittel der Polycarbonatlösung zu Wasserdampf beträgt insbesondere 1 :1 bis 12:1. Vorzugsweise beträgt das Verhältnis von Lösungsmittel der Polycarbonatlösung zu Wasserdampf 3:1 - 5:1.

Die Einmischstelle von Wasserdampf in die Polycarbonatlösung ist insbesondere ein T-förmiges Rohrstück oder eine Düse vom Ejektortyp, vorzugsweise eine Düse vom Ejektortyp. Das Agglomerationsrohr ist gerade oder gebogen und hat ein Verhältnis von Länge zu Durchmesser von 10000 bis 100, vorzugsweise 1000 bis 300 und ganz besonders bevorzugt 900. Das Agglomerationsrohr mit den oben angegebenen Abmessungen kann auch mit einem Mantelrohr umgeben sein und dann als rohrförmiger Wärmetauscher verwendet werden. Die Temperatur des rohrförmigen Wärmetauschers beträgt 150°C bis 300°C, vorzugsweise 200°C bis 220°C. Das Rohr mündet in den Abscheider oberhalb der Flüssigkeitssäule, in der Grenzschicht von Flüssigkeitssäule und Gasraum oder unterhalb der Flüssigkeitssäule

Der Abscheider ist z.B. ein zylindrischer Behälter mit einem unteren konischen Auslaufteil, an das ein zylindrisches Rohrstück mit einem oberen und einem unteren druckfesten Schieber angeschlossen ist. Über diese Rohrschleuse können die zum Boden gesunkenen kompaktierten Agglomerate periodisch abgelassen werden. Aus der Druckschleuse gelangen die Polycarbonatpartikel nach Druckausgleich mit der Atmosphäre in ein Gefäß, das mit einem Siebboden, Maschenweite der Siebfläche 0,5 mm, zur Entwässerung versehen ist. Der Abscheider hat ein Volumen von 80 bis 200 l pro 10 kg Polycarbonatpartikel pro Stunde. Der Abscheider kann mit einer Rührvorrichtung versehen sein. Die Höhe des Abscheiders beträgt 0,5 bis 1,5 seines Durchmessers.

Die aus den erfindungsgemäßen Verfahren erhältlichen Polycarbonatagglomerate, die auch Gegenstand der Erfindung sind, können zu Formkörpern verarbeitet werden, in dem man, beispielsweise die wie vorstehend isolierten Polycarbonate zu Granulat extrudiert und dieses Granulat, gegebenenfalls nach Zusatz von Additiven, Farbstoffen, Füllstoffen oder Glasfasern durch Spritzguß zu verschiedenen Artikeln in bekannter Weise verarbeitet.

Die erfindungsgemäß hergestellten Polycarbonatagglomerate weisen eine höhere Schüttdichte insbesondere von > 280 g/l auf und können direkt in Standardextrudern ohne Stopfschnecke weiterverarbeitet werden oder ohne vorherige Kompaktierung.

Den erfindungsgemäß hergestellten Polycarbonatagglomeraten können, für meist nicht transparente Anwendungen, noch andere Thermoplaste in üblichen Mengen, d.h. zwischen 10-50 Gew.-%, bezogen auf das erfindungsgemäße Polycarbonat, zugemischt werden.

Geeignete andere Thermoplaste sind beispielsweise, gegebenenfalls aromatische Polyestercarbonate, Polycarbonate auf Basis anderer Bisphenole als die erfindungsgemäßen Polycarbonate, Polyalkylen-terephthalate, EPDM-Polymerisate, Polystyrol und auf Basis von Styrol, Acrylnitril und Butadien hergestellte Co- und Pfropfcopolymerisate, wie insbesondere ABS.

Die Verwendung der Polycarbonatkörper aus dem weiterverarbeiteten Agglomerat erfolgt in üblicher Weise, beispielsweise auf dem Gebiet der Elektrotechnik, der Optik, im Fahrzeugbau und in der Beleuchtungsindustrie.

Die Erfindung wird nachstehend anhand der Figuren beispielhaft naher erläutert: Die Figuren stellen Beispiele der für das erfindungsgemäße Verfahren verwendbaren Verfahrensanordnungen dar.

Es zeigen:
- Figur 1: Eine schematische Verfahrensanordnung mit Abscheider als Trennvorrichtung für die flüchtigen Mischungsbestandteile
- Figur 2: Eine Verfahrensanordnung mit einem Zyklon als Trennvorrichtung und einer nachgeschalteten Kompaktierungsstufe für das PC-Agglomerat.

### Beispiele

### Beispiel 1

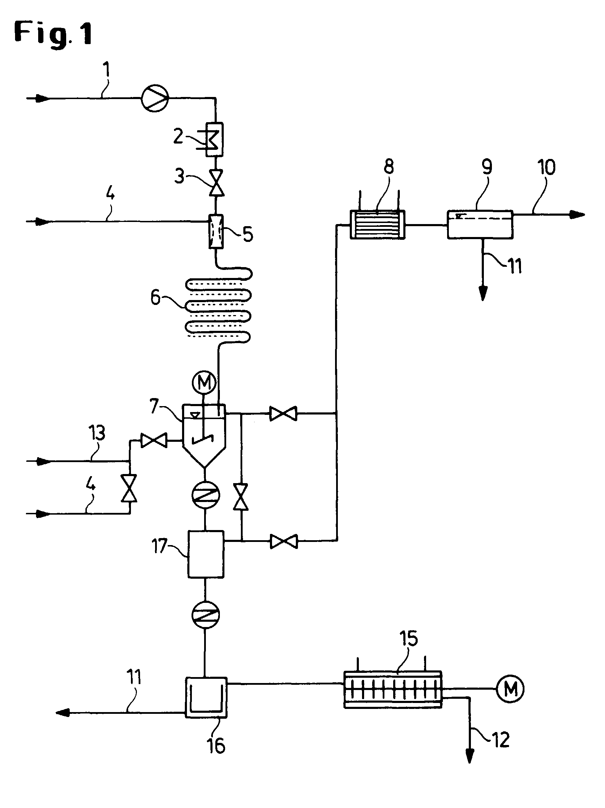

25 kg Polycarbonat auf Basis Bisphenol A mit einem mittleren Molekulargewicht von M_{w}= 29800 löst man in 142 kg Dichlormethan auf. Von dieser 15 %igen Polycarbonatlösung 1 werden 52,5 kg/h über einen Wärmetauscher 2 und ein Ventil 3 in einer T-stückförmigen Düse 5 mit 11,2 kg/h Wasserdampf 4 mit einer Temperatur von 195 °C und bei einem Druck von 14,5 bar gemischt (siehe Fig. 1). Diese Mischung wird durch ein Rohr 6 mit einem inneren Durchmesser von 6 mm, einer Wandstärke von 1 mm und einer Länge von 6 m, das mit einem Mantelrohr mit einen äußeren Durchmesser von 18 mm (Wandstarke von 1,5 mm) umgeben ist, zu einem zylindrischen Abscheider 7, der mit einem konischen Auslauf versehen ist, mit einem Volumen von ca. 2001 geleitet. Der zylindrische Abscheider 7 hat eine Höhe von 50 cm und einen Durchmesser von 70 cm mit einem unteren konischen Auslaufteil, an das ein zylindrisches Rohrstück mit einem oberen und einem unteren druckfesten Schieber angeschlossen ist. Über diese Rohrschleuse wurden die zum Boden gesunkenen kompaktierten Agglomerate alle 5 Minuten in einen zylindrischen Abscheider 17 abgelassen, aus dem sie nach Druckausgleich mit der Atmosphäre in ein weiteres Gefäß 21, das mit einem Siebboden zur Entwässerung versehen ist, abgelassen werden.

Die Temperatur der Polycarbonatlösung in Dichlormethan betrug eingangs 23°C, das Mantelrohr blieb unbeheizt. Die Lösungsmitteldämpfe werden zu einem Wärmetauscher geleitet und kondensiert.

Die Restfeuchte wurde durch 4-stündiges Trocknen bei 120 °C im Trockenschrank entfernt. Das getrocknete Agglomerat hat eine Schüttdichte von 306 g/l. Dichlormethan war nicht nachweisbar. Die Nachweisgrenze der Bestimmungsmethode für das Dichlormethan liegt bei 2 ppm.

Das aus dem Druckbehälter mit den Polycarbonatagglomeraten entnommene Wasser wurde durch heißes Frischwasser ersetzt. Die Temperatur im Behälter wurde durch Einleiten von Wasserdampf (16 bar, 195 °C) konstant gehalten. Die Lösungsmitteldämpfe wurden über eine Brüdenleitung aus dem Behälter über ein auf 5 bar eingestelltes Entspannungsventil abgeleitet und kondensiert.

### Beispiel 2

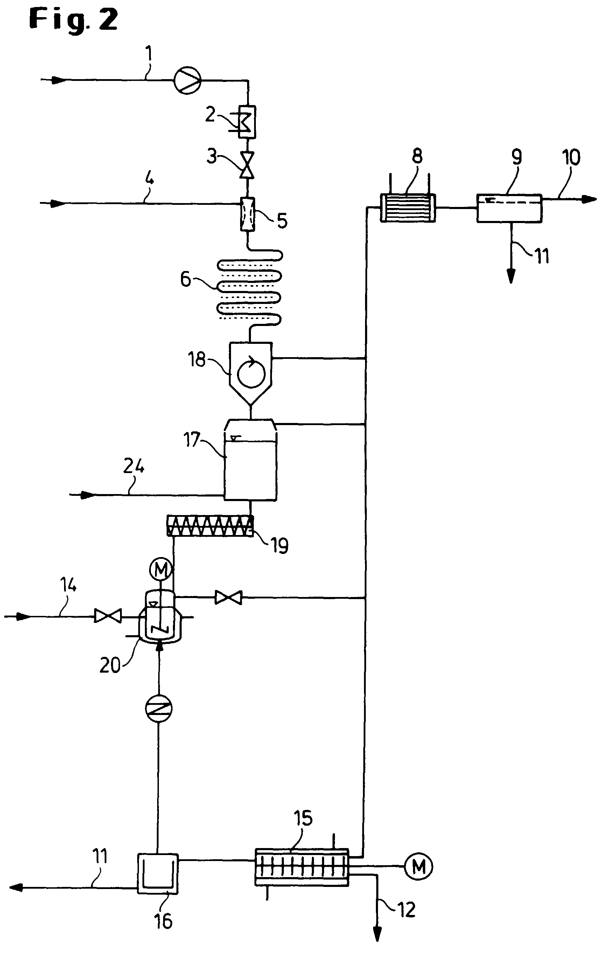

55 kg/h der unter Beispiel 1 beschriebenen Lösung 1 von Polycarbonat in Dichlormethan wurden wie unter Beispiel 1 beschrieben mit 12 kg/h Wasserdampf gemischt und wie in Beispiel 1 durch das Agglomerationsrohr 6 geleitet. Die Abscheidung erfolgte jedoch in einem Zyklon 18 mit einem Volumen von 100 l (siehe Fig. 2). Das abgeschiedene Agglomerat wurde in einem zylindrischen Schachttrockner 17 mit einem Innendurchmesser von 200 mm und einer Höhe von 1200 mm gefördert. Durch die 1000 mm hohe Agglomeratschüttung des Schachttrockners 17 wurden 5 kg/h Wasserdampf 24 (T=150°C) geleitet. Nach 45 Min. wurde mittels Schneckenförderer 19 kontinuierlich Agglomerat aus dem Schachttrockner 17 ausgetragen.

Zur batchweisen Kompaktierung der wasserfeuchten Polycarbonat-Agglomerate wurden ca. 50 l der Agglomerate in einen druckfesten Rührkessel 20 mit einem von Volumen 200 l, der mit 110 l Wasser gefüllt war, gefördert. Über die Mantelbeheizung wurde der Kesselinhalt unter Rühren mit einer Rührgeschwindigkeit von 10 UpM bei einem Druck von 5,1 bar auf 153 °C erhitzt. Die Temperatur der Heizung betrug 200°C. Nach Erreichen der Innentemperatur von 150 °C wurde die Mischung noch 30 Minuten bei dieser Temperatur gerührt. Danach wurde der Kessel 20 auf atmosphärischen Druck entspannt und der Inhalt durch Siebung vom Wasser getrennt. Nach 4-stündigem Trocknen bei 120 °C im Trockenschrank erhielt man ein Agglomerat mit einer Schüttdichte von 322 g/l. Der Dichlormethangehalt betrug < 2 ppm.

## Patentansprüche

1. Verfahren zur Herstellung von Polycarbonatagglomerat aus Polycarbonatlösungen durch Wasserdampfbehandlung von Polycarbonatlösungen und anschließender Trocknung, dadurch gekennzeichnet, daß eine Lösung (1) von 3 bis 30 Gew.-% Polycarbonat, in einem organischen Lösungsmittel in einer Düse (5) mit Wasserdampf (4) von 100 bis 300°C und bei einem Druck von 2 bis 100 bar gemischt wird, die Mischung in einem Rohr oder einem rohrförmigen Wärmetauscher (6) mit einem Länge/Durchmesser-Verhältnis von 100 bis 10 000 zu einem Abscheider (7) geleitet wird, dessen Volumen, bezogen auf einen Durchsatz von 10 kg Polycarbonat pro Stunde von 80 bis 200 l beträgt und dessen Höhe von 0,5 bis 1,5 seines Durchmessers beträgt und der zu 50 bis 75 % seines Volumens mit Wasser gefüllt ist, und in dem die gasförmigen Bestandteile der einströmenden Mischung bei einem Druck von 0,9 bis 7 bar und einer Temperatur von 120 bis 180°C abgetrennt werden, die entstehende Mischung von Polycarbonatpartikeln und Wasser in einem Abstand von 5 bis 30 min über eine Druckschleuse vom Abscheiderboden entnommen, auf Umgebungsdruck entspannt und durch Sieben oder Zentrifugieren getrennt wird, das Polycarbonat getrocknet und dem Abscheider (7) entnommenes Wasser dem Prozeß gegebenenfalls wieder zurückgeführt wird.

2. Verfahren zur Herstellung von Polycarbonatagglomerat aus Polycarbonatlösungen durch Wasserdampfbehandlung von Polycarbonatlösungen und anschließender Trocknung, dadurch gekennzeichnet, daß eine Lösung (1) von 3 bis 30 Gew.-% Polycarbonat in einem organischen Lösungsmittel in einer Düse (5) mit Wasserdampf (4) von 100°C bis 300°C und einem Druck von 2 bis 100 bar gemischt wird, die Mischung in einem Rohr oder rohrförmigen Wärmetauscher (6) mit einem Länge zu Durchmesser-Verhältnis von 100 bis 10 000 zu einem Zyklon (18) geleitet wird, in welchem das Polycarbonatagglomerat abgeschieden wird, daß die abgeschiedenen Polycarbonatagglomerate einem dem Zyklon (18) nachgeschalteten Schachttrockner (17) zugeführt und hierdurch durch Leiten von Wasserdampf vom restlichen Lösungsmittel befreit werden, daß die Wasserdampf behandelten Agglomerate in einen Druckbehälter (20) gefördert und unter erhöhtem Druck und einer Temperatur nahe der Glastemperatur des Polymeren unter Rühren zu Polycarbonatpartikeln weiter agglomeriert werden.

3. Verfahren nach einem der Ansprüche 1 oder 2, dadurch gekennzeichnet, daß eine 12 bis 25 gew.-%ige Polycarbonatlösung eingesetzt wird.

4. Verfahren nach den Ansprüchen 1 bis 3, dadurch gekennzeichnet, daß die Polycarbonatlösung in der Düse (5) mit Wasserdampf einer Temperatur von 190 bis 220°C und einem Druck von 15 bis 30 bar gemischt wird.

5. Verfahren nach einem der Ansprüche 1 bis 4, dadurch gekennzeichnet, daß das Länge/Durchmesserverhältnis des Rohres oder des rohrförmigen Wärmetauschers (6) von 300 bis 1 000 beträgt.

6. Verfahren nach Anspruch 1, dadurch gekennzeichnet, daß der Abscheiderdruck von 3 bis 5 bar beträgt und die Temperatur von 140 bis 160°C beträgt.

7. Verfahren nach Anspruch 1 oder 6, dadurch gekennzeichnet, daß die Entnahme des Gemisches von Wasser und Polycarbonatagglomerat in einem Abstand von 5 bis 30 min erfolgt.

8. Verfahren nach einem der Ansprüche 1 bis 7, dadurch gekennzeichnet, daß das isolierte Prozeßwasser als Wasserdampf oder Abscheiderflüssigkeit zurückgeführt wird.

9. Verfahren nach einem Ansprüche 1 bis 8, dadurch gekennzeichnet, daß das Gewichtsverhältnis von Polycarbonatlösungsmittel zu Wasserdampf von 1:1 bis 12:1 beträgt.

10. Verfahren gemaß einem der Ansprüche 1 bis 9, dadurch gekennzeichnet, daß als organisches Lösungsmittel für das Polycarbonat. Dichlormethan Monochlorbenzol, Toluol, Tetrahydrofuran oder 1,3-Dioxolan sowie Mischungen der genannten Lösungsmittel, insbesondere Dichlormethan eingesetzt werden.
